# DEMANDE DE BREVET EUROPEEN

(11) **EP 1 927 509 A1**
(43) Date de publication de la demande: **04.06.2008**
(21) Numéro de dépôt: 07301506.7
(22) Date de dépôt: 29.10.2007
(51) Int. Cl.: B60Q 1/26, B60R 13/00, B60R 19/02

(54) **Dispositif formant pare-chocs à surface réfléchissante pour véhicule automobile, pourvu d'un catadioptre de type standard**

(30) Priorité: 30.11.2006 FR 0655229
(71) Demandeur: Peugeot Citroen Automobiles SA, 78943 Vélizy-Villacoublay Cedex (FR)
(72) Inventeur: Mouret, Jérôme, 92100, BOULOGNE (FR); D'Ambrosio, Léonardo, 91510, LARDY (FR)
(74) Mandataire: Allain, Laurent

(57) **Abrégé**

L'invention concerne un dispositif formant pare-chocs à surface réfléchissante pour véhicule automobile, comprenant un élément (3) pourvu d'une telle surface réfléchissante (9) et un profilé (2) définissant une face avant (1a) et une face arrière (1b) pour le dispositif (1) .

Selon l'invention, le profilé (2) comprend une fenêtre de visibilité (8) de la surface réfléchissante (9) réalisée dans son épaisseur, l'élément réfléchissant (3) étant apte à être fixé sur la face arrière (1b) du dispositif au niveau de cette fenêtre (8) avec sa surface réfléchissante (9) disposée en regard de la fenêtre (8) et étant rendue visible à travers cette fenêtre depuis la face avant (1a) du dispositif.

L'invention trouve application dans le domaine des véhicules automobiles.

## Description

L'invention concerne un dispositif formant pare-chocs à surface réfléchissante pour véhicule automobile.

Un dispositif connu de ce type comprend deux pièces principales à savoir un profilé présentant une forme générale de pare-chocs et définissant les faces avant et arrière de ce dispositif, ainsi qu'un élément pourvu d'une surface réfléchissante, tel qu'un catadioptre, fixé sur la peau extérieure du profilé par un système de clippage réalisé directement sur cette peau.

L'objectif premier des procédés actuels de fabrication de pièces de véhicules autmobiles, consiste à développer des pièces qui seraient identiques pour des véhicules présentant des silhouettes ou des styles différents, tels que différents véhicules d'une même gamme.

Ce concept de standardisation des pièces permet d'utiliser des moyens industriels de fabrication de pièces de véhicules, identiques pour les différentes déclinaisons de véhicules possibles, diminuant en conséquence les coûts de fabrication de ces pièces.

Toutefois, les deux pièces du dispositif susmentionné ne répondent pas à ces critères car les dimensions et les formes du catadioptre ainsi que du profilé de ce dispositif doivent être modifiées entre deux véhicules présentant des styles différents. Ainsi, la fabrication de ces pièces requiert des procédés propres à la silhouette du véhicule dans lequel elles sont destinées à être intégrées, et qui sont en conséquence coûteux.

L'invention vise à palier cet inconvénient.

A cet effet, l'invention concerne un dispositif formant pare-chocs à surface réfléchissante pour véhicule automobile, comprenant un élément pourvu d'une telle surface réfléchissante et un profilé définissant une face avant et une face arrière pour le pare-chocs.

Selon l'invention, le profilé comprend une fenêtre de visibilité de l'élément réfléchissant réalisée dans son épaisseur et l'élément réfléchissant est apte à être fixé sur la face arrière du dispositif au niveau de cette fenêtre avec sa surface réfléchissante disposée en regard de la fenêtre, cette surface étant rendue visible au moins en partie à travers cette fenêtre depuis la face avant du dispositif.

Selon cette première caractéristique, la forme générale de la partie visible du catadioptre est définie par la fenêtre du profilé. Ainsi, il est possible de fabriquer un même catadioptre pour des véhicules de styles différents, répondant au concept de standardisation ci-dessus décrit, la différenciation de style entre deux dispositifs appartenant à des véhicules de silhouettes différentes, étant définie par la différence de forme des contours des deux fenêtres réalisées dans les profilés associés.

Selon encore une autre caractéristique, la fenêtre forme un espace de visibilité de la surface réfléchissante, définissant une aire inférieure à celle de cette surface réfléchissante, le contour de la partie de la surface réfléchissante rendue visible par la fenêtre étant définit par le contour de cette fenêtre.

Avantageusement, l'élément réfléchissant comprend des moyens d'encliquetage au profilé et le profilé comprend des moyens d'encliquetage complémentaires.

Selon une autre caractéristique, les moyens d'encliquetage de l'élément réfléchissant comprennent une patte de fixation et les moyens d'encliquetage complémentaires comprennent une embase faisant saillie extérieurement de la face arrière du dispositif et pourvue d'un orifice d'accueil de la patte de fixation complémentaire.

Selon encore une autre caractéristique, l'élément réfléchissant comprend au moins deux pattes s'étendant à partir respectivement de deux bords opposés de l'élément réfléchissant.

Avantageusement, l'élément réfléchissant comprend deux pattes s'étendant à partir du bord inférieur de l'élément réfléchissant, et une patte s'étendant à partir du bord supérieur de cet élément et disposée entre les deux pattes inférieures.

L'invention sera mieux comprise, et d'autres caractéristiques, et avantages de celle-ci apparaîtront au cours de la description suivante, faite en référence aux figures annexées, parmi lesquelles :
- la figure 1 illustre une vue avant d'un catadioptre d'un dispositif formant pare-chocs à surface réfléchissante selon l'invention ;
- la figure 2 représente une vue avant partielle du dispositif selon l'invention pourvu du catadioptre de la figure 1 ;
- la figure 3 est une vue arrière du catadioptre de la figure 1 ;
- la figure 4 montre une vue arrière du dispositif de la figure 2.

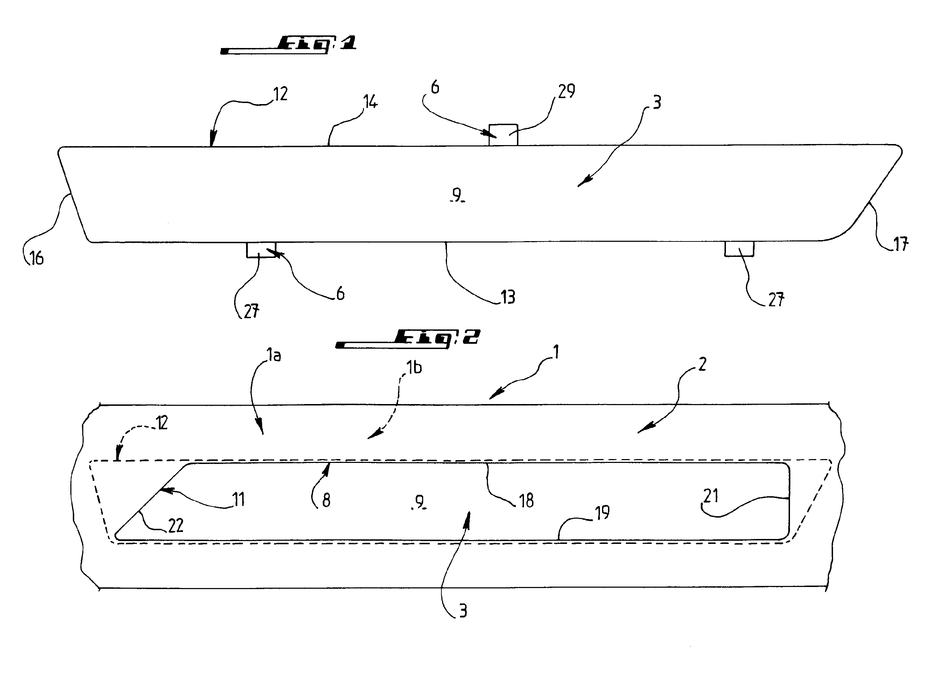

Le dispositif 1 formant pare-chocs à surface réfléchissante 1 selon l'invention, tel que représenté sur la figure 2, est indifféremment intégrable à l'avant ou à l'arrière d'un véhicule automobile pour constituer un pare-chocs correspondant du véhicule.

Ce dispositif comprend un profilé servant de corps principal 2 présentant une forme générale de pare-chocs et destiné à être fixé à l'avant ou à l'arrière d'une partie de carrosserie du véhicule, au moyen d'éléments de fixation. Ce profilé 2 définit une face avant 1a, destinée à être visible depuis l'extérieur du véhicule et une face arrière 1b, destinée à être appliquée contre une partie correspondante de la carrosserie du véhicule.

Ce dispositif comprend en outre un élément pourvu d'une surface réfléchissante tel qu'un catadioptre 3, servant à réfléchir un faisceau lumineux dans la direction d'où ce dernier provient, quel que soit l'angle d'incidence de ce faisceau, de façon à rendre le véhicule visible notamment de nuit.

Le profilé 2 et le catadioptre 3 constituent deux pièces distinctes assemblables l'une à l'autre au moyen d'un système de clippage 4 définissant une partie mâle 6 solidaire du catadioptre 3 et une partie femelle 7 fixée au profilé 2.

Selon l'invention, le profilé 2 comprend une fenêtre 8 de visibilité de la surface réfléchissante 9 du catadioptre 3 réalisée dans l'épaisseur du profilé 2, et le système de clippage 4 permet une fixation du catadioptre 3 sur la face arrière 1b du profilé 2, avec sa surface réfléchissante 9 visible depuis la face avant 1a du dispositif 1, au travers de la fenêtre 8.

Etant donné que l'aire de la surface vide définie par la fenêtre 8 est inférieure à celle définie par la surface réfléchissante 9, le profilé 2 agit tel un masque sur le catadioptre 3 et modifie à souhait la partie perçue de la surface réfléchissante 9 de ce catadioptre 3.

Ainsi, comme visible sur la figure 2, le contour apparent de la surface réfléchissante 3 est défini par le contour 11 de la fenêtre 8 et diffère sensiblement du contour réel 12 de cette surface 9.

A titre d'exemple, comme visible sur la figure 1, la surface réfléchissante 9 du catadioptre 3 selon l'invention présente la forme générale d'un trapèze « tête en bas » et comprend ainsi un bord inférieur 13, un bord supérieur 14 parallèle au bord 13 et de plus grande longueur que ce dernier, et deux bords latéraux inclinés 16, 17 joignant respectivement les deux extrémités adjacentes des bords inférieur et supérieur 16, 17.

Au contraire, le contour de la partie découpée et ôtée du profilé 2 pour former la fenêtre 8, présente une forme approximativement rectangulaire à deux bords longs opposés parallèles 18, 19, plus rapprochés l'un de l'autre et plus courts que le sont les bords opposés 13, 14 de la surface réfléchissante 9. Ce contour définit encore un bord court 21 perpendiculaire aux bords 18, 19 et un bord court 22 incliné, le bord inférieur 19 du contour de cette fenêtre 8 étant plus long que le bord supérieur 18 de ce contour.

En conséquence, lorsque la surface réfléchissante 9 est appliquée contre la face arrière 1b du dispositif 1 au niveau de la fenêtre 8, le forme de la partie visible de cette surface est identique à celle de l'espace vide défini par la fenêtre 8 et bien entendu, différente de la forme de la surface réfléchissante non masquée de la figure 1.

Et toute autre forme pour le contour de la fenêtre 8, qui définit une aire inférieure à celle de la surface réfléchissante permettra de modifier l'aspect visible de cette surface depuis l'avant du dispositif.

Comme mentionné ci-dessus, le maintien du catadioptre 3 dans sa position plaquée contre la face arrière 1b du dispositif 1 est assuré par le système de clippage 4.

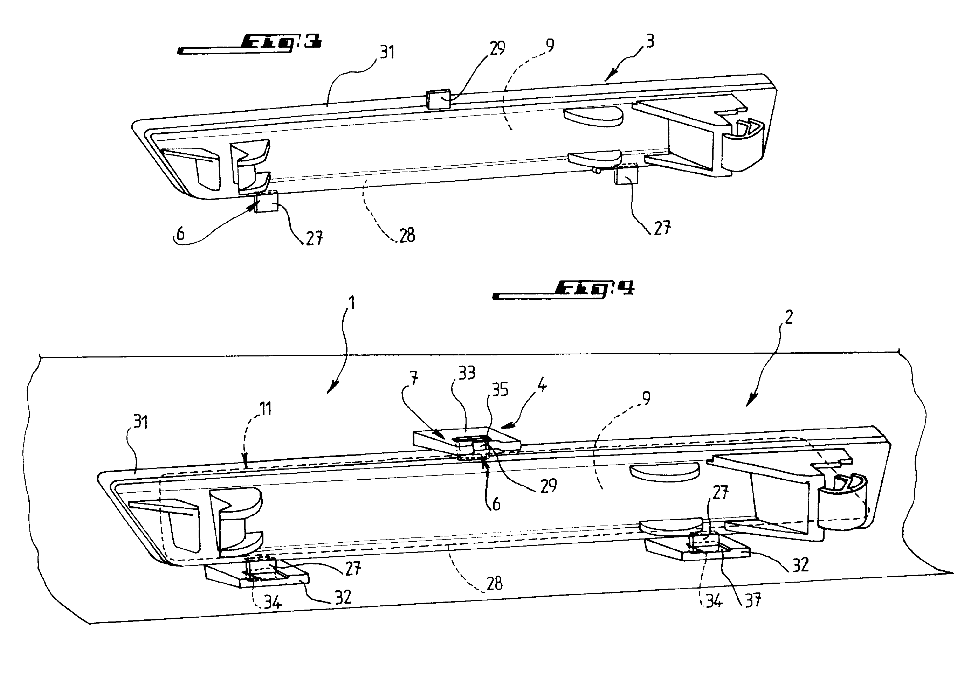

Tel que visible sur la figure 3, la partie mâle de ce système est constituée par deux pattes latérales de fixation inférieure 27 s'étendant parallèlement à la surface réfléchissante 9 à partir d'un rebord horizontal inférieur 28 du catadioptre 3 et par une patte centrale de fixation supérieure 29 s'étendant également parallèlement à la surface réfléchissante à partir d'un rebord supérieur 31 du catadioptre 3.

Et comme représenté sur la figure 4, les parties femelles 7 du profilé 2 sont constituées par des embases 32, 33 disposées autour de la fenêtre 8 en faisant saillie perpendiculairement de la face arrière du dispositif et en étant situées en correspondance avec les pattes de fixation 27, 29 du catadioptre 3. Ces embases 32, 33 comprennent chacune un orifice d'accueil 34, 35 de la patte concernée 27, 29, ainsi qu'une rampe 37 de guidage de l'insertion de la patte correspondante 27, 29.

Les embases inférieures et supérieure 32, 33 sont réalisées de façon à être légèrement élastiquement déformables selon une direction verticale pour autoriser l'insertion des pattes 27, 29 du catadioptre 3 par écartement mutuel.

Plus précisément, l'assemblage du catadioptre 3 au profilé 2 est par exemple effectué par rapprochement du catadioptre 3 de l'arrière 1b du dispositif, avec sa surface réfléchissante située en regard de la fenêtre 8, par insertion de la patte supérieure 29 dans l'orifice 34 de l'embase supérieure correspondante 33, et par glissement des pattes inférieures 27 sur les rampes 37 des embases inférieures 32, provoquant un écartement de l'embase supérieure 33 des embases inférieures 32, jusqu'à l'arrivée des pattes inférieures 27 dans leur orifice respectif 34, 35, provoquant le retour des embases 32, 33 à leur position non écartée.

L'invention telle que décrite ci-dessus apporte différents avantages parmi lesquels :
- la possibilité de fabriquer un catadioptre standard, c'est-à-dire de forme unique, et de pouvoir toutefois modifier la forme de sa partie apparente, en fonction du style, de la silhouette ou de la gamme du véhicule auquel il est intégré,
- la facilité de modification de la forme de la partie apparente de la surface réfléchissante, par la modification de la forme du contour de la fenêtre réalisée au sein du profilé,
- la diminution des coûts et du temps de fabrication, et la baisse du nombre d'outils nécessaires à la fabrication de dispositifs formant pare-chocs pour des véhicules de styles différents,
- la garantie de l'isostatisme du catadioptre selon les directions OX, OY, OZ au moyen du système d'encliquetage du dispositif.

## Revendications

1. Dispositif formant pare-chocs à surface réfléchissante pour véhicule automobile, comprenant un catadioptre (3) pourvu d'une telle surface réfléchissante (9) et un profilé (2) définissant une face avant (1a) et une face arrière (1b) pour le dispositif (1), dans lequel le profilé (2) comprend une fenêtre de visibilité (8) de la surface réfléchissante (9) réalisée dans l'épaisseur du profilé, et dans lequel le catadioptre (3) est apte à être fixé sur la face arrière (1b) du dispositif au niveau de cette fenêtre (8) avec sa surface réfléchissante (9) disposée en regard de la fenêtre (8), la surface (9) étant rendue visible au moins en partie à travers cette fenêtre depuis la face avant (1a) du dispositif.

2. Dispositif selon la revendication 1, dans lequel la fenêtre (8) forme un espace de visibilité de la surface réfléchissante (9), définissant une aire inférieure à celle de cette surface (9), le contour de la partie de la surface réfléchissante (9) rendue visible par la fenêtre (8) étant défini par le contour (11) de cette fenêtre (8).

3. Dispositif selon la revendication 2, dans lequel le catadioptre (3) comprend des moyens d'encliquetage (6) à la face arrière (1b) du dispositif, et dans lequel le profilé (2) comprend des moyens d'encliquetage complémentaires (7).

4. Dispositif selon la revendication 3, dans lequel les moyens d'encliquetage (6) du catadioptre (3) comprennent une patte de fixation (27, 29) et dans lequel les moyens d'encliquetage complémentaires (7) comprennent une embase (32, 33) faisant saillie extérieurement de la face arrière (1b) du dispositif et pourvue d'un orifice d'accueil (34, 35) de la patte de fixation complémentaire (27, 29).

5. Dispositif selon la revendication 4, dans lequel le catadioptre (3) comprend au moins deux pattes (27, 29) s'étendant à partir respectivement de deux bords opposés (28, 31) de l'élément réfléchissant (3).

6. Dispositif selon la revendication 5, dans lequel le catadioptre (3) comprend deux pattes (27) s'étendant à partir du bord inférieur (28) de l'élément réfléchissant (3), et une patte (29) s'étendant à partir du bord supérieur (31) de cet élément et disposée entre les deux pattes inférieures (27).
